(19) Europäisches Patentamt
European Patent Office
Office européen des brevets

(11) **EP 4 265 767 A1**

(12) **EUROPEAN PATENT APPLICATION**
published in accordance with Art. 153(4) EPC

(43) Date of publication:
**25.10.2023 Bulletin 2023/43**

(21) Application number: **21911421.2**

(22) Date of filing: **17.12.2021**

(51) International Patent Classification (IPC):
*C22C 38/00* [(2006.01)]    *C22C 38/02* [(2006.01)]
*C22C 38/04* [(2006.01)]    *C22C 38/60* [(2006.01)]
*C21D 8/12* [(2006.01)]    *H01F 1/147* [(2006.01)]

(52) Cooperative Patent Classification (CPC):
**C21D 8/12; C22C 38/00; C22C 38/02; C22C 38/04; C22C 38/60; H01F 1/147**

(86) International application number:
**PCT/KR2021/019330**

(87) International publication number:
**WO 2022/139354 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 KR 20200179372**

(71) Applicant: POSCO Co., Ltd
**Pohang-si, Gyeongsangbuk-do 37859 (KR)**

(72) Inventors:
• **SONG, Daehyun**
**Pohang-si, Gyeongsangbuk-do 37859 (KR)**
• **LEE, Sangwoo**
**Pohang-si, Gyeongsangbuk-do 37859 (KR)**

(74) Representative: **Meissner Bolte Partnerschaft mbB**
**Patentanwälte Rechtsanwälte**
**Postfach 86 06 24**
**81633 München (DE)**

(54) **GRAIN-ORIENTED ELECTRICAL STEEL SHEET AND MANUFACTURING METHOD THEREFOR**

(57)    A grain-oriented electrical steel sheet according to an embodiment of the present invention comprises, by wt%, 2.0-4.0% of Si, 0.04-0.2% of Mn, 0.010% or less of N (excluding 0%), 0.005% or less of C (excluding 0%), 0.03-0.08% of Sn and 0.01-0.2% of Cr, the balance of Fe and inevitable impurities, and inclusions comprising at least one from among AlN, (Al,Si)N, (Al,Si,Mn)N, MnS, CuS and $Al_2O_3$, wherein the average diameter of the inclusions is 0.5-6.0 $\mu m$ , and 40-130/$mm^2$ inclusions having a diameter of 6.0 $\mu m$ or less from among the inclusions can be included.

FIG. 1

EP 4 265 767 A1

**Description**

**[Technical Field]**

An embodiment of the present invention relates to a grain oriented electrical steel sheet and a manufacturing method of the same. More particularly, an embodiment of the present invention relates to a grain oriented electrical steel sheet capable of inhibiting deterioration in magnetism even if a hot-rolled sheet annealing step is omitted by appropriately adjusting the content of Si, C, N, Cr, Sn, etc., and appropriately adjusting a coiling temperature in a hot-rolling step, and a manufacturing method of the same.

**[Background Art]**

A grain oriented electrical steel sheet is a soft magnetic material having excellent magnetic properties in one direction or a rolling direction since a texture of a bloom with respect to the rolling direction is a Goss texture, which is {110}<001>. In order to express the texture and improve the magnetic properties of the grain oriented electrical steel sheet, complex processes such as component control in steelmaking, slab reheating in hot-rolling and hot-rolling process factor control, hot-rolled sheet annealing heat treatment, cold-rolling, primary recrystallization annealing, and secondary recrystallization annealing are required and should be managed very precisely and strictly.

Among them, the hot-rolled sheet annealing process is an essential process for stable secondary recrystallization of Goss-oriented crystal grains during secondary recrystallization annealing by uniformly controlling the non-uniform microstructure and inclusions of the hot-rolled sheet after hot-rolling. However, since the hot-rolled sheet annealing is a factor of increasing production cost of the grain oriented electrical steel sheet, if the microstructure and inclusions of the hot-rolled sheet may be made uniform while omitting the hot-rolled sheet annealing, manufacturing cost may be reduced according to the hot-rolled sheet annealing process and productivity may be improved.

When heating the slab, thermal deviation in the skid inevitably occurs, so the hot-rolled sheet inclusions and non-uniform microstructure occur. When the hot-rolled sheet annealing is omitted, the above-described thermal deviation may not be reduced, which ultimately leads to deterioration in magnetism when the deviation in magnetism of the grain oriented electrical steel sheet finally manufactured is deepened and serious.

Various attempts have been made to omit the hot-rolled sheet annealing, but there was no technology that directly proposed a solution for technology for reducing thermal deviation in the skid in the heating furnace when heating the slab and a technology capable of resolving inclusions and microstructure non-uniformity.

**[Disclosure]**

**[Technical Problem]**

The present invention attempts to provide a grain oriented electrical steel sheet and a manufacturing method of the same. More specifically, the present invention attempts to provide a grain oriented electrical steel sheet capable of inhibiting deterioration in magnetism even if a hot-rolled sheet annealing step is omitted by appropriately adjusting the content of Si, C, N, Cr, Sn, etc., and appropriately adjusting a coiling temperature in a hot-rolling step, and a manufacturing method of the same.

**[Technical Solution]**

According to an embodiment of the present invention, a grain oriented electrical steel sheet includes, by wt%, 2.0 to 4.0% of Si, 0.04 to 0.2% of Mn, 0.010% or less of N (excluding 0%), 0.005% or less of C (excluding 0%), 0.03 to 0.08% of Sn and 0.01 to 0.2% of Cr, the balance of Fe and inevitable impurities, and
inclusions comprising at least one from among AlN, (Al,Si)N, (Al,Si,Mn)N, MnS, CuS, and $Al_2O_3$, in which an average diameter of the inclusions may be 0.5 to 6.0 $\mu$m, and 40 to 130/mm$^2$ inclusions having a diameter of 6.0 $\mu$m or less from among the inclusions may be included.

An area fraction of crystal grains with a crystal grain diameter of 1 mm or less may be 10% or less.

The grain oriented electrical steel sheet may further contain Al: 0.005 to 0.030 wt%.

The grain oriented electrical steel sheet may further contain S: 0.010 wt% or less.

The grain oriented electrical steel sheet may further contain P: 0.0005 to 0.045 wt%.

The grain oriented electrical steel sheet may further contain Sb: 0.1 wt% or less.

The grain oriented electrical steel sheet may further contain at least one of Co: 0.1 wt% or less, Ni: 0.1 wt% or less, and Mo: 0.1 wt% or less.

According to another embodiment of the present invention, a manufacturing method of a grain oriented electrical steel sheet includes: manufacturing a hot-rolled steel sheet by hot-rolling a slab containing, by wt%, Si: 2.0 to 4.0%, Mn: 0.04 to 0.2%, N: 0.010% or less (excluding 0%), C: 0.001 to 0.04%, Sn: 0.03 to 0.08% and Cr: 0.01 to 0.2 %, the balance of Fe and inevitable impurities and satisfying Expression 1 below; coiling the hot-rolled steel sheet; manufacturing a cold-rolled steel sheet by cooling the coiled hot-rolled steel sheet as it is and cold-rolling the coiled hot-rolled steel sheet; performing primary recrystallization annealing on the cold-rolled steel sheet; and performing secondary recrystallization annealing on the cold-rolled steel sheet that has been primary recrystallization annealed.

[Expression 1]

$$0.038 \times [Si] - 0.069 - [N] \le [C] \le 0.038 \times [Si] - 0.069 + [N]$$

(In Expression 1, [Si], [N] and [C] denote contents (wt%) of Si, N and C in the slab, respectively.)

In the coiling, a coiling temperature may be 700 to 850°C, and the Expression 2 below may be satisfied.

[Expression 2]

$$90 \le (0.038 \times [Si] + [N] + [C]) \times [CT] \le 130$$

(In Expression 2, [Si], [N] and [C] denote the contents (wt%) of Si, N and C in the slab, respectively, and [CT] denotes the coiling temperature (°C).)

The manufacturing method may further include heating the slab to 1300°C or lower before the manufacturing of the hot-rolled steel sheet.

There may be no heat treatment for applying heat from an outside of the steel sheet after the coiling and before the manufacturing of the cold-rolled steel sheet.

The manufacturing of the cold-rolled steel sheet may include cold-rolling the hot-rolled steel sheet once.

The performing of the primary recrystallization annealing may include a decarburizing and nitriding, after the decarburizing, the nitriding may be performed, after the nitriding, the decarburizing may be performed, or the decarburizing and the nitriding may be performed simultaneously.

The manufacturing method may further include, after the performing of the primary recrystallization annealing, applying an annealing separator.

In the performing of the secondary recrystallization annealing, secondary recrystallization may be completed at a temperature of 900 to 1210°C.

**[Advantageous Effects]**

In a grain oriented electrical steel sheet according to an embodiment of the present invention, by reducing thermal deviation in a skid in a heating furnace when heating a slab, it is possible to resolve inclusions and microstructure non-uniformity even if hot-rolled sheet annealing is omitted.

Ultimately, it is possible to improve magnetism of a grain oriented electrical steel sheet even if the hot-rolled sheet annealing is omitted.

**[Description of the Drawings]**

FIG. 1 is a photograph of inclusions analyzed in Inventive Material 1.
FIG. 2 is a photograph of inclusions analyzed in Comparative Material 1.
FIG. 3 is a photograph of a final grain oriented electrical steel sheet manufactured in Inventive Material 7.
FIG. 4 is a photograph of a final grain oriented electrical steel sheet manufactured in Comparative Material 31.
FIG. 5 is a photograph of a final grain oriented electrical steel sheet manufactured in Comparative Material 21.
FIG. 6 is a photograph of a final grain oriented electrical steel sheet manufactured in Comparative Material 22.

**[Mode for Invention]**

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present invention.

Terminologies used herein are to mention only a specific embodiment, and do not to limit the present invention. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present invention pertains unless defined otherwise. Terms defined in commonly used dictionaries are additionally interpreted as having meanings consistent with related technical literature and currently disclosed content, and are not interpreted in ideal or very formal meanings unless defined.

In addition, unless otherwise specified, % means wt%, and 1 ppm is 0.0001 wt%.

In an embodiment, further including additional elements means that the balance of iron (Fe) is replaced and included as much as the additional amount of the additional elements.

Hereinafter, an embodiment will be described in detail so that a person of ordinary skill in the art to which the present invention pertains can easily implement the present invention. As those skilled in the art would realize, the described embodiments may be modified in various different ways, all without departing from the spirit or scope of the present invention.

A grain oriented electrical steel sheet includes, by wt%, 2.0 to 4.0% of Si, 0.04 to 0.2% of Mn, 0.010% or less of N (excluding 0%), 0.005% or less of C (excluding 0%), 0.03 to 0.08% of Sn and 0.01 to 0.2% of Cr, the balance of Fe and inevitable impurities.

In the following, the reason for limiting the alloy components will be described.

Si: 2.0 to 4.0 wt%

Silicon (Si) is a basic composition of an electrical steel sheet, and serves to lower core loss by increasing a specific resistance of a material. When the Si content is too little, the specific resistance decreases to increase eddy current loss, so core loss properties deteriorate, and during primary recrystallization annealing, phase transformation between ferrite and austenite becomes active, so a primary recrystallization texture is severely damaged. In addition, during secondary recrystallization annealing, the phase transformation between the ferrite and the austenite occurs, so the secondary recrystallization becomes unstable and a {110} Goss texture is severely damaged. On the other hand, when the Si content is excessive, the $SiO_2$ and $Fe_2SiO_4$ oxide layers are excessively and densely formed during the primary recrystallization annealing to delay decarburization behavior, so the phase transformation between the ferrite and the austenite continuously occurs during the primary recrystallization annealing treatment, thereby severely damaging the primary recrystallization texture. In addition, nitriding behavior is also delayed due to the decarburization behavior delay effect according to the formation of the dense oxide layer described above, and thus, nitrides such as (Al, Si, Mn)N and AlN are not sufficiently formed, so a sufficient crystal grain inhibitory force required for the secondary recrystallization during high-temperature annealing may be secured.

In addition, when the excessive Si is contained, brittleness, which is a mechanical characteristic, is increased and toughness is decreased, so the occurrence rate of sheet breakage increases during the rolling process, and weldability between sheets is poor, making it impossible to secure easy workability. As a result, when the Si content is not controlled within the predetermined range, the formation of the secondary recrystallization becomes unstable, resulting in serious damage to magnetic properties and deterioration in workability. Accordingly, Si may be contained in amount of 2.0 to 4.0 wt%. More specifically, Si may be contained in amount of 2.1 to 3.5 wt%.

Mn: 0.04 to 0.2 wt%

Manganese (Mn) is an important element that reduces total core loss by increasing specific resistance as in Si to reduce eddy current loss, and not only reacts with S in a steel state to form Mn-based sulfides, but also reacts with nitrogen introduced by nitriding with Si to form inclusions of (Al,Si,Mn)N, thereby inhibiting growth of primary recrystal grains to cause secondary recrystallization as well as affect a surface quality of final products. When Mn is contained too little, the surface quality of the final product may deteriorate. When Mn is contained too much, an austenite phase fraction is greatly increased, the Goss texture is damaged, the magnetic flux density is reduced, and the oxide layer is excessively formed during the decarburization annealing, which may hinder decarburization. Accordingly, Mn may be contained in amount of 0.04 to 0.20 wt%. More specifically, Mn may be contained in amount of 0.07 to 0.15 wt%.

N: 0.010 wt% or less

Nitrogen (N) is an important element that reacts with Al to form Al-based nitrides, and may be added in amount of 0.010 wt% or less in the slab. When too much N is contained in the slab, it causes a surface defect called Blister due to nitrogen diffusion in the process after hot-rolling, and since too much nitride is formed in the slab state, the rolling becomes difficult, which is a cause of complicating the subsequent process and increasing the manufacturing cost. More specifically, N may be contained in amount of 0.005 wt% or less. Meanwhile, N, which is additionally required to form nitrides such as (Al,Si,Mn)N, AlN, and (Si,Mn)N, may be reinforced by nitriding the steel using ammonia gas in the annealing process after cold-rolling. However, since N is removed again in the secondary recrystallization annealing process, N remaining in the final electrical steel sheet may be 0.010 wt% or less.

C: 0.005 wt% or less

Carbon (C) is an element that contributes to refinement of crystal grains and improvement of elongation by causing phase transformation between ferrite and austenite, and is an essential element that improves rollability of the electrical steel sheet which has strong brittleness and poor rollability. When the C remains in the final product, the C is an element that deteriorates magnetic properties by precipitating carbide formed due to the magnetic aging effect into the product sheet, so it is preferable that the C should be controlled in an appropriate amount. When too little C is contained in the slab, the phase transformation between the ferrite and the austenite does not sufficiently occur, which may cause the non-uniformity of the slab and hot-rolled microstructure. As a result, the inclusions are coarsely and non-uniformly precipitated, which not only makes secondary recrystallization unstable, but also impairs cold-rollability after hot-rolling. In addition, the non-uniformity of the inclusions and microstructure may occur due to thermal deviations in the skid in the heating furnace during heating of the slab. When too much C is contained in the slab, the carbide becomes too coarse and the amount of precipitation excessively increases, decarburization is not sufficiently performed, so the density of the Goss texture may deteriorate, the secondary recrystallization texture may be severely damaged, and furthermore, the magnetic properties may deteriorate due to the magnetic aging in the final product. Therefore, the C content in the slab is 0.0010 to 0.0400 wt%. More specifically, the C content in the slab may be 0.0200 to 0.0380 wt%. Meanwhile, in order to minimize the occurrence of the magnetic aging during the use of the final product, that is, the grain oriented electrical steel sheet, the C content of the final grain oriented electrical steel sheet product after the secondary recrystallization annealing is 0.005 wt% or less.

Sn: 0.03 to 0.08 wt%

Tin (Sn) is segregated elements of a grain boundary, and is known as a crystal grain growth inhibitor because it is an element that hinders the movement of the grain boundary. In the Si content range in an embodiment of the present invention, since crystal grain growth inhibitory force for smooth secondary recrystallization behavior is insufficient, Sn, which is segregated in the grain boundary and hinders the movement of the grain boundary, is absolutely necessary. When Sn is contained too little, it is difficult to exhibit the above-mentioned effect appropriately. Conversely, when the excess Sn is added, if the temperature rising rate is not controlled or maintained for a certain period of time in the primary recrystallization annealing section, the crystal grain growth inhibitory force is too strong, so the stable secondary recrystallization may not be obtained. Accordingly, the Sn content may be contained in amount of 0.03 to 0.08 wt%. More specifically, the Sn may be contained in amount of 0.03 to 0.07 wt%.

Cr: 0.01 to 0.2 wt%

Chromium (Cr) promotes the formation of a hard phase in the hot-rolled sheet to promote the formation of {110} <001> of the Goss texture during cold-rolling and thus reduces a holding time of austenite phase transformation to prevent damage to the texture due to the long holding time of the austenite phase transformation. In addition, by promoting the formation of the oxide layer on the surface formed during the primary recrystallization annealing process, there is an effect of solving the disadvantage of inhibiting the formation of the oxide layer due to Sn among alloy elements used as a crystal grain growth aid inhibitor. When Cr is contained too little, it is difficult to exhibit the above-mentioned effect appropriately. Conversely, when the excess Cr is added, it promotes the formation of a dense oxide layer during the primary recrystallization annealing process rather than during the formation of the oxide layer, so the formation of the oxidation layer may be poor and may hinder the decarburization and nitriding. Accordingly, Cr may be contained in amount of 0.01 to 0.2 wt%. More specifically, the Cr may be contained in amount of 0.03 to 0.1 wt%.
The slab according to an embodiment of the present invention satisfies Expression 1 below.

[Expression 1]

$$0.038 \times [Si] - 0.069 - [N] \leq [C] \leq 0.038 \times [Si] - 0.069 + [N]$$

(In Expression 1, [Si], [N] and [C] denote contents (wt%) of Si, N and C in the slab, respectively.)

As shown in Expression 1, when the C content is controlled according to the Si and N content in the slab, the inclusions are almost or completely solutionized in the step of heating and hot-rolling the slab, and then formed very uniformly. Accordingly, even if the hot-rolled sheet annealing is omitted, adverse effects caused by thermal deviation from the skid in the heating furnace may be reduced or prevented when heating the slab, and the average diameter of residual inclusions that deteriorate magnetism becomes 0.5 to 6.0 $\mu$m, making it very effective in securing stable magnetic properties. Meanwhile, the average diameter of the inclusions were measured by completely removing the oxide layer on the surface after the secondary recrystallization annealing, polishing the surface to about 50 to 100 $\mu$m to prepare a replica specimen, and performing image analysis from photographs taken through TEM. A measurement reference plane is a plane parallel to a rolling plane.

In an embodiment of the present invention, the inclusions refer to Al-based, Mg-based, Ca-based oxides, etc., and various precipitates. The inclusions include precipitates, and unlike the inclusions, the precipitates refer to nitrides and sulfides such as (Al,Si)N, (Al,Si,Mn)N, MnS, and CuS, instead of oxides. The inclusions contain at least one from among AlN, (Al,Si)N, (Al,Si,Mn)N, MnS, CuS, and $Al_2O_3$. The (Al,Si)N means a composite nitride of Al and Si, and (Al,Si,Mn)N means a composite nitride of Al, Si, and Mn.

As described above, through the C content in the slab and Expression 1, it is possible to reduce the thermal deviation in the skid in the furnace when heating the slab. The growth of the inclusions due to the thermal deviation in the skid may be suppressed by omitting the hot-rolled sheet annealing process in the subsequent process. More specifically, the average diameter of the inclusions may be 1.0 to 5.0 $\mu$m.

The case where the inclusions are too small is a case in which hot-rolled sheet annealing is performed, which does not meet the purpose according to an embodiment of the present invention. When the inclusions are too large, the magnetism may be poor.

The density of the inclusions may be 40 to 130 pieces/mm$^2$. In this case, the reference diameter of the inclusions may be 6.0 $\mu$m or less. Since the inclusions exceeding 6.0 $\mu$m are not substantially generated in an embodiment of the present invention, the upper limit may be limited as described above. The lower limit of the reference diameter of the inclusions is not particularly limited, but may be 1 nm in terms of measurement. The case where too few inclusions are generated is the case where a large amount of inclusions exceeding 6.0 $\mu$m are generated, which has a fatal effect on magnetism. When too many inclusions are present, the magnetism may be poor. More specifically, the density of the inclusions may be 40 to 125 pieces/mm$^2$.

By appropriately forming the inclusions, even if the hot-rolled sheet annealing is omitted, the secondary recrystallization may be completely generated in the secondary recrystallization annealing process. Specifically, the area fraction of crystal grains having a crystal grain diameter of 1 mm or less may be 10% or less. The crystal grain diameter and fraction are based on a plane parallel to the rolling plane (ND plane). The diameter is calculated as a diameter of a circle assuming an imaginary circle with the same area as the crystal grain.

The average diameter of the crystal grains may be 0.1 to 5 cm.

The grain oriented electrical steel sheet may further contain Al: 0.005 to 0.030 wt%. As described above, when additional elements are further contained, they are added in place of the balance of Fe.

Al: 0.005 to 0.030 wt%

Aluminum (Al) serves as a powerful crystal grain growth inhibitor by combining nitrogen ions introduced by ammonia gas with Al, Si, and Mn present in a solid solution in steel during the annealing process after cold-rolling to form nitrides in the form of (Al, Si, Mn) N and AlN, in addition to Al-based nitrides precipitated during hot-rolling. When the Al content is too little, a sufficient effect as an inhibitor may not be expected because the number and volume formed are quite low. Conversely, if the Al content is too much, the Al-based nitride becomes too coarse and the crystal grain growth inhibitory force decreases. In addition, when reheating the slab, the Al-based nitride is not completely dissolved, so the size and distribution are very non-uniformly precipitated after reheating the slab, and the secondary recrystallization behavior becomes unstable, which may deteriorate the magnetic properties of the final product or increase the deviation. Therefore, when Al is further contained, the content may be 0.005 to 0.030 wt%. More specifically, Al may be contained in amount of 0.015 to 0.030 wt%.

The grain oriented electrical steel sheet may further contain S: 0.010 wt% or less.

S: 0.010 wt% or less

When too much sulfur (S) is added, the S is segregated in the center of the slab to non-uniformly precipitate sulfide inclusions such as MnS and CuS, so the primary recrystallization microstructure is non-uniformly induced and the secondary recrystallization becomes unstable. Therefore, when S is further included, the content may be 0.010 wt% or less. In addition, since it takes an enormous amount of time and money to control desulfurization to an extremely low level during steelmaking, the lower limit may exceed 0%. In an embodiment of the present invention, a lower limit is not particularly set.

P: 0.005 to 0.045 wt%

Phosphorus (P) is segregated on the grain boundary to play an auxiliary role in preventing the movement of the grain boundary and at the same time suppressing the crystal grain growth, and has the effect of improving the {110} <001> texture in terms of the microstructure. When P is added, if the addition amount is too little, there is no addition effect. Conversely, when the addition amount is too much, the brittleness increases and the rollability deteriorates greatly. Therefore, when P is further contained, P may be further contained in amount of 0.005 to 0.045 wt%. More specifically, P may be contained in amount of 0.01 to 0.035 wt%.
The grain oriented electrical steel sheet may further contain Sb: 0.1 wt% or less.

Sb: 0.1 wt% or less

Antimony (Sb) has the effect of suppressing the growth of crystal grains by being segregated at the grain boundary, and stabilizing the secondary recrystallization. However, the antimony (Sb) has a low melting point to be easily diffused to the surface during the primary recrystallization annealing, thereby preventing the nitriding by the decarburization, the formation of the oxide layer, and the nitrification. Therefore, Sb may be further added, if necessary. When the excessive Sb is added, Sb may hinder decarburization and suppress the formation of the oxide layer that is the basis of the base coating. Accordingly, Sb may be contained in amount of 0.1 wt% or less. More specifically, Sb may be further contained in amount of 0.01 to 0.05 wt%.
The grain oriented electrical steel sheet according to an embodiment of the present invention may further contain at least one of Co: 0.1 wt% or less, Ni: 0.1 wt% or less, and Mo: 0.1 wt% or less.

Co: 0.1 wt% or less

Cobalt (Co) is an alloy element that is effective in improving the magnetic flux density by increasing the magnetization of iron, and at the same time, reduces core loss by increasing the specific resistance. When Co is appropriately added, the above effects may be additionally obtained. When too much Co is added, the amount of austenite phase transformation increases, which can negatively affect the microstructure, the inclusions, and the texture. Therefore, when Co is added, Co may be further included in amount of 0.1 wt% or less. More specifically, Co may be further contained in amount of 0.005 to 0.05 wt%.
The upper limits of Ni and Mo can also be added in amount of 0.1 wt%.
Iron (Fe) is contained as the balance. In addition, the inevitable impurities may be contained. The inevitable impurities refer to impurities that are inevitably introduced during the steelmaking and the process of manufacturing the grain oriented electrical steel sheet. Since the inevitable impurities are widely known, a detailed description thereof will be omitted. In an embodiment of the present invention, the addition of elements other than the above-described alloy components is not excluded, and these elements may be variously contained within a range that does not impair the technical spirit of the present invention. When additional elements are further contained, they are contained in place of Fe which is the balance.
A method for manufacturing a grain oriented electrical steel sheet according to an embodiment of the present invention includes: hot-rolling a slab to manufacture a hot rolled steel sheet; coiling a hot-rolled steel sheet; cooling the coiled hot-rolled steel sheet as it is and cold-rolling the cooled hot-rolled steel sheet to manufacture a cold-rolled steel sheet; primary recrystallization annealing the cold-rolled steel sheet; and secondary recrystallization annealing the cold-rolled steel sheet subjected to the primary recrystallization annealing.
Hereinafter, each step will be described in detail.
First, the slab is hot-rolled to manufacture the hot-rolled steel sheet. Since the alloy components of the slab have been described with reference to the alloy components of the grain oriented electrical steel sheet, duplicate descriptions will be omitted. Specifically, the slab may contain, by wt%, 2.0 to 4.0% of Si, 0.04 to 0.2% of Mn, 0.010% or less of N (excluding 0%), 0.001 to 0.04% of C, 0.03 to 0.08% of Sn and 0.01 to 0.2% of Cr, the balance of Fe and inevitable impurities, and satisfy Expression 1 below.

## [Expression 1]

$$0.038 \times [Si] - 0.069 - [N] \leq [C] \leq 0.038 \times [Si] - 0.069 + [N]$$

(In Expression 1, [Si], [N] and [C] denote contents (wt%) of Si, N and C in the slab, respectively.)

Returning to the description of the manufacturing method, the method may further include heating the slab to 1300°C or lower before the manufacturing of the hot-rolled steel sheet.

Next, the slab is hot-rolled to manufacture the hot-rolled steel sheet. The thickness of the hot-rolled steel sheet may be 5 mm or less.

Hereinafter, the hot-rolled steel sheet is coiled. In this case, the coiling temperature may be 700 to 850°C. In an embodiment of the present invention, since the hot-rolled sheet annealing is omitted after coiling, when the coiling temperature is too low, the size of the inclusions in the hot-rolled sheet is too small and large, so it is difficult to control the primary recrystallization microstructure and the secondary recrystallization becomes unstable, resulting in poor magnetism. When the coiling temperature is too high, the inclusions become too coarse and the amount is small, so it is difficult to control the primary recrystallization microstructure again and the secondary recrystallization becomes unstable, resulting in poor magnetism. More specifically, the coiling temperature may be 740 to 830°C. The coiling temperature means the average temperature of the steel sheet from the start of coiling the hot-rolled sheet for which the hot-rolling has been completed into a coil shape until the winding is completed.

In this case, it may satisfy Expression 2 below.

It may satisfy Expression 2 below.

## [Expression 2]

$$90 \leq (0.038 \times [Si] + [N] + [C]) \times [CT] \leq 130$$

(In Expression 2, [Si], [N] and [C] denote the contents (wt%) of Si, N and C in the slab, respectively, and [CT] denotes the coiling temperature (°C).)

When the value of Expression 2 is too low, the inclusions may occur non-uniformly. When the value of Expression 2 is too large, the contents of Si, N, and C are high, and the inclusions may also occur non-uniformly.

Next, the coiled hot-rolled steel sheet is cooled as it is, and cold-rolled to manufacture the cold-rolled steel sheet.

In an embodiment of the present invention, cooling as it is means that there is no heat treatment by applying heat from the outside after coiling the hot-rolled steel sheet. That is, it means that the hot-rolled sheet annealing process is omitted. After the hot-rolling, the pickling is performed to remove a hot-rolled scale. When pickling, shot blasting may or may not be performed before or after pickling.

In the step of manufacturing the cold-rolled steel sheet, twice or more cold-rolling processes including one-time cold-rolling or intermediate annealing may be performed. Specifically, it may be made of a step of cold-rolling the hot-rolled steel sheet once.

The thickness of the cold-rolled steel sheet should be less than 0.65mm. Meanwhile, when performing the cold-rolling, the cold-rolling reduction ratio may be rolled at 87% or more. This is because the density of the Goss texture increases as the cold-rolling reduction ratio increases. However, it is also possible to apply the cold-rolling reduction ratio lower than that.

Next, the cold-rolled sheet is subjected to the primary recrystallization annealing. In this case, the primary recrystallization annealing step includes a decarburizing step and a nitriding step. The decarburizing step and the nitriding step may be performed regardless of the order. That is, the nitriding step may be performed after the decarburizing step, the decarburizing step may be performed after the nitriding step, or the decarburizing step and the nitriding step may be performed simultaneously. In the decarburizing step, C may be decarburized to 0.005 wt% or less. More specifically, C may be decarburized to 0.003 wt% or less. In the nitriding step, N may be nitrided in amount of 0.015 wt% or more.

The soaking temperature of the primary recrystallization annealing step may be 840°C to 900°C. Even if the primary recrystallization annealing is performed at a temperature lower than 840°C or higher than 900°C, there is no problem in exhibiting the functions suggested by the present invention.

After the primary recrystallization annealing step, an annealing separator may be applied. Since the annealing separator are widely known, a detailed description thereof will be omitted. For example, the annealing separator containing MgO as a main component may be used.

Next, the cold-rolled sheet for which the primary recrystallization annealing has been completed is subjected to the secondary recrystallization annealing.

A main object of the secondary recrystallization annealing is to form the {110}<001> texture by the secondary recrystallization, give an insulation property by forming a glass film by an reaction between the oxide layer formed during the primary recrystallization annealing and MgO, and remove impurities damaging the magnetic characteristics. As a method of secondary recrystallization annealing, in the temperature rising section before the secondary recrystallization occurs, a mixed gas of nitrogen and hydrogen is maintained to protect nitride, which is a grain growth inhibitor, so the secondary recrystallization develops well, and after the completion of the secondary recrystallization, in the soaking step, it is maintained for a long time in a 100% hydrogen atmosphere to remove impurities.

In the secondary recrystallization annealing step, the secondary recrystallization may be completed at a temperature of 900 to 1210°C.

The grain oriented electrical steel sheet according to an embodiment of the present invention has particularly excellent core loss and magnetic flux density characteristics. The grain oriented electrical steel sheet according to an embodiment of the present invention may have a magnetic flux density $B_8$ of 1.87T or more and a core loss $W_{17/50}$ of 1.10W/kg or less. In this case, the magnetic flux density $B_8$ is the size (Tesla) of the magnetic flux density induced under the magnetic field of 800 A/m, and the core loss $W_{17/50}$ is the magnitude (W/kg) of the core loss induced under the conditions of 1.7 Tesla and 50 Hz. More specifically, the grain oriented electrical steel sheet according to an embodiment of the present invention may have a magnetic flux density $B_8$ of 1.89T or more and a core loss $W_{17/50}$ of 1.00W/kg or less. A thickness that is a measurement standard may be 0.30 mm.

Hereinafter, specific embodiments of the present invention are described. However, the following Examples are only specific embodiments of the present invention, and the present invention is not limited to the following Examples.

Example 1

An ingot was made by changing, by wt%, Si: 2.85%, Mn: 0.092%, Al: 0.025%, N: 0.0032%, S: 0.004%, Sn: 0.045%, P: 0.028%, Cr: 0.032%, and C content as shown in Table 1 below, and then vacuum melting steel components containing the balance of Fe and other inevitable impurities as the remaining components, heated to a temperature of 1240°C, and hot rolled to a thickness of 2.8mm, and then coiled at the coiling temperature as shown in Table 1 below. Thereafter, it was pickled and cold rolled once to a thickness of 0.28 mmt without heat treatment, and the cold-rolled sheet was subjected to simultaneous decarburization annealing heat treatment at a temperature of 870°C in a humid hydrogen, nitrogen, and ammonia mixed gas atmosphere so that the carbon content was 30 ppm and the nitrogen content was 200 ppm. Subsequently, the steel sheet was applied with MgO which is an annealing separator, and then subjected to the final annealing heat treatment, and regarding the final annealing heat treatment, the steel sheet was heated up to 1200°C in a mixed gas atmosphere of 25 vol% of nitrogen and 75 vol% of hydrogen, and after reaching 1200°C, was maintained in a 100% of hydrogen atmosphere for 10 hours or more and then furnace cooled. Measurement values of magnetic properties according to C content are as shown in Table 1.

An average diameter and density of the inclusions were measured by removing all of an oxide layer on a surface after secondary recrystallization annealing, polishing the surface to about 100 $\mu$m to prepare a replica specimen, and conducting image analysis from photographs taken through TEM.

Whether the secondary recrystallization occurred was determined to be unstable or non-occurring when an area fraction of crystal grains with a crystal grain diameter of 1 mm or less exceeded 10%, and was marked by X.

(Table 1)

| C (wt%) | Coiling temperature | Average diameter of inclusion ($\mu m$) | Density of inclusion (piece/m m$^2$) | Whether secondary recrystallization occurs | $W_{17/50}$ (W/kg) | $B_8$ (Tesla) | Remarks |
|---|---|---|---|---|---|---|---|
| 0.0363 | 741 | 2.6 | 125 | O | 1.00 | 1.91 | Inventive Material 1 |
| 0.0369 | 578 | 9.9 | 20 | X | 1.38 | 1.83 | Comparative Material 1 |
| 0.0355 | 874 | 3.7 | 163 | X | 1.42 | 1.84 | Comparative Material 2 |
| 0.0365 | 797 | 4.9 | 123 | O | 0.97 | 1.91 | Inventive Material 2 |

(continued)

| C (wt%) | Coiling temperature | Average diameter of inclusion ($\mu$m) | Density of inclusion (piece/m m$^2$) | Whether secondary recrystallization occurs | $W_{17/50}$ (W/kg) | $B_8$ (Tesla) | Remarks |
|---|---|---|---|---|---|---|---|
| 0.0396 | 566 | 11.0 | 12 | X | 1.35 | 1.84 | Comparative Material 3 |
| 0.0346 | 856 | 1.7 | 187 | X | 1.31 | 1.86 | Comparative Material 4 |
| 0.0377 | 795 | 3.5 | 125 | O | 0.95 | 1.91 | Inventive Material 3 |
| 0.0366 | 640 | 10.0 | 16 | X | 1.39 | 1.84 | Comparative Material 5 |
| 0.0345 | 883 | 4.7 | 178 | X | 1.35 | 1.85 | Comparative Material 6 |
| 0.0369 | 816 | 1.0 | 47 | O | 0.98 | 1.92 | Inventive Material 4 |
| 0.0346 | 525 | 10.9 | 37 | X | 1.42 | 1.84 | Comparative Material 7 |
| 0.0353 | 886 | 3.1 | 139 | X | 1.35 | 1.83 | Comparative Material 8 |
| 0.0568 | 816 | 4.9 | 131 | X | 1.47 | 1.85 | Comparative Material 9 |
| 0.0199 | 828 | 4.8 | 30 | X | 1.42 | 1.82 | Comparative Material 10 |
| 0.0517 | 675 | 8.4 | 20 | X | 1.38 | 1.85 | Comparative Material 11 |
| 0.0186 | 546 | 10.3 | 39 | X | 1.31 | 1.85 | Comparative Material 12 |
| 0.0429 | 885 | 4.7 | 141 | X | 1.43 | 1.84 | Comparative Material 13 |
| 0.0206 | 860 | 1.8 | 174 | X | 1.47 | 1.82 | Comparative Material 14 |

As shown in Table 1, in the Inventive Material, it can be seen that the alloy components and coiling temperature correspond to an appropriate range and also satisfy both Expressions 1 and 2, so inclusions are formed small and the density is low. Ultimately, it can be confirmed that the secondary recrystallization is appropriately formed, and both the core loss and magnetic flux density are excellent.

On the other hand, in the Comparative Material, it can be confirmed that the alloy components and coiling temperature are not appropriately controlled, so the inclusions are formed non-uniformly, and the secondary recrystallization is not appropriately formed, resulting in poor core loss and magnetic flux density.

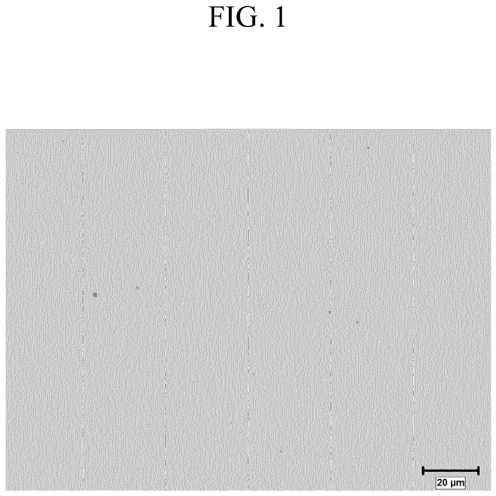

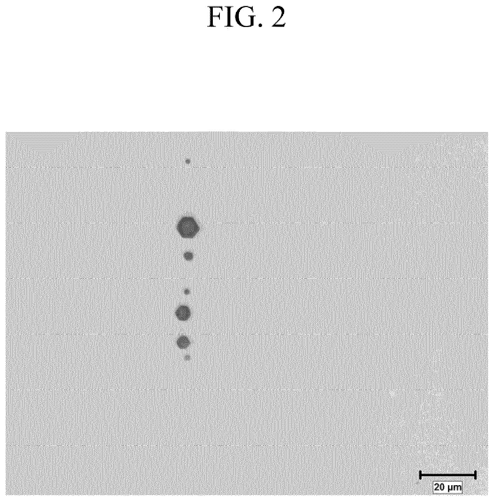

FIGS. 1 and 2 are photographs of inclusions analyzed in Inventive Material 1 and Comparative Material 1. In Inventive Material 1, it can be confirmed that the inclusions are fine and precipitated in a small amount, and on the contrary, in Comparative Material 1, it can be confirmed that the inclusions are large and precipitated in a large amount.

As a result of the analysis, the inclusions included AlN, (Al,Si,Mn)N, MnS, and CuS.

Example 2

An ingot was made by changing, by wt%, Al: 0.022%, S: 0.003%, Sb: 0.02%, Sn: 0.06%, P: 0.02%, Cr: 0.05%, and Si, C, and N contents as shown in Table 2 below, and then vacuum melting steel components containing the balance of Fe and other inevitable impurities as the remaining components, heated to a temperature of 1200°C, and then hot rolled to a thickness of 2.3 mm, and performed at the coiling temperature as shown in Table 2 below. Thereafter, it is pickled and cold rolled once to a thickness of 0.30 mmt, and the cold-rolled sheet was subjected to simultaneous decarburization annealing heat treatment at a temperature of 870°C in a humid hydrogen, nitrogen, and ammonia mixed gas atmosphere so that the carbon content was 30 ppm and the nitrogen content was 180 ppm. Subsequently, the steel sheet was applied with MgO which is an annealing separator, and then subjected to the final annealing heat treatment, and regarding the final annealing heat treatment, the steel sheet was heated up to 1200°C in a mixed gas atmosphere of 25v% of nitrogen and 75v% of hydrogen, and after reaching 1200°C, was maintained in a 100% of hydrogen atmosphere for 10 hours or more and then furnace cooled. The magnetic properties after high-temperature annealing according to Si, C, N content and the measured values of the particle diameters of residual inclusions per 1 $mm^2$ are as shown in Table 2.

(Table 2)

| Si (wt%) | C (wt%) | N (wt%) | Coiling temperature (°C) | $W_{17/50}$ (W/kg) | $B_8$ (Tesla) | Average diameter of inclusion | Density of inclusion (piece/mm$^2$) | Whether secondary recrystallization occurs | Remarks |
|---|---|---|---|---|---|---|---|---|---|
| 2.8 | 0.0366 | 0.0095 | 759 | 0.99 | 1.89 | 2.9 | 120 | O | Inventive Material 5 |
| 2.9 | 0.0342 | 0.0022 | 763 | 1.35 | 1.85 | 10.7 | 18 | X | Comparative Material 15 |
| 2.8 | 0.0508 | 0.0059 | 760 | 1.33 | 1.82 | 2.0 | 32 | X | Comparative Material 16 |
| 2.7 | 0.0353 | 0.0037 | 765 | 0.95 | 1.91 | 3.6 | 52 | O | Inventive Material 6 |
| 3.1 | 0.0328 | 0.0074 | 760 | 1.38 | 1.84 | 9.5 | 12 | X | Comparative Material 17 |
| 2.9 | 0.0547 | 0.0071 | 764 | 1.33 | 1.85 | 5.6 | 35 | X | Comparative Material 18 |
| 2.7 | 0.0324 | 0.0048 | 758 | 0.99 | 1.89 | 3.3 | 65 | O | Inventive Material 7 |
| 3.1 | 0.0379 | 0.0066 | 760 | 1.39 | 1.83 | 8.5 | 25 | X | Comparative Material 19 |
| 3.1 | 0.0529 | 0.0020 | 762 | 1.38 | 1.82 | 5.8 | 34 | X | Comparative Material 20 |

(continued)

| Si (wt %) | C (wt%) | N (wt%) | Coiling temperature (°C) | $W_{17/50}$ (W/kg) | $B_8$ (Tesla) | Average diameter of inclusion | Density of inclusion (piece/mm²) | Whether secondary recrystallization occurs | Remarks |
|---|---|---|---|---|---|---|---|---|---|
| 2.9 | 0.0412 | 0.0034 | 549 | 1.43 | 1.86 | 5.6 | 34 | X | Comparative Material 21 |
| 2.6 | 0.0176 | 0.0065 | 547 | 1.31 | 1.86 | 9.9 | 14 | X | Comparative Material 22 |
| 2.9 | 0.0558 | 0.0085 | 554 | 1.45 | 1.83 | 5.7 | 29 | X | Comparative Material 23 |
| 2.9 | 0.0398 | 0.0029 | 545 | 1.38 | 1.85 | 8.9 | 16 | X | Comparative Material 24 |
| 2.7 | 0.0206 | 0.0089 | 544 | 1.32 | 1.82 | 10.3 | 13 | X | Comparative Material 25 |
| 2.9 | 0.0485 | 0.0060 | 552 | 1.43 | 1.84 | 2.5 | 38 | X | Comparative Material 26 |
| 3 | 0.0463 | 0.0021 | 556 | 1.39 | 1.82 | 3.6 | 38 | X | Comparative Material 27 |
| 2.7 | 0.0208 | 0.0096 | 557 | 1.35 | 1.83 | 7.9 | 35 | X | Comparative Material 28 |
| 3.1 | 0.0591 | 0.0086 | 544 | 1.42 | 1.82 | 4.9 | 33 | X | Comparative Material 29 |
| 3.1 | 0.0391 | 0.0098 | 762 | 0.99 | 1.91 | 2.3 | 66 | O | Inventive Material 8 |
| 3.1 | 0.0389 | 0.007 | 761 | 1.45 | 1.85 | 2.6 | 16 | X | Comparative Material 30 |

As shown in Table 2, in the Inventive Material, it can be seen that the alloy components and coiling temperature correspond to an appropriate range and also satisfy both Expressions 1 and 2, so inclusions are formed small and the density is low. Ultimately, it can be confirmed that the secondary recrystallization is appropriately formed, and both the core loss and magnetic flux density are excellent.

On the other hand, in the Comparative Material, it can be confirmed that the alloy components and coiling temperature are not appropriately controlled, so the inclusions are formed non-uniformly, and the secondary recrystallization is not appropriately formed, resulting in poor core loss and magnetic flux density.

Example 3

Example 3 was carried out in the same way as Inventive Material 7, but after hot-rolling, the case where hot-rolled sheet annealing was omitted or performed was compared.

(Table 3)

| Hot-rolled sheet annealing | $W_{17/50}$ (W/kg) | $B_8$ (Tesla) | Whether secondary recrystallization occurs | Remarks |
|---|---|---|---|---|
| Omission | 0.99 | 1.89 | O | Inventive Material 7 |
| Performa nce | 0.99 | 1.89 | O | Comparative Material 31 |

As shown in Table 3, even if the hot-rolled sheet annealing is omitted, it can be confirmed that the magnetic properties appear corresponding to the case where the hot-rolled sheet annealing is performed.

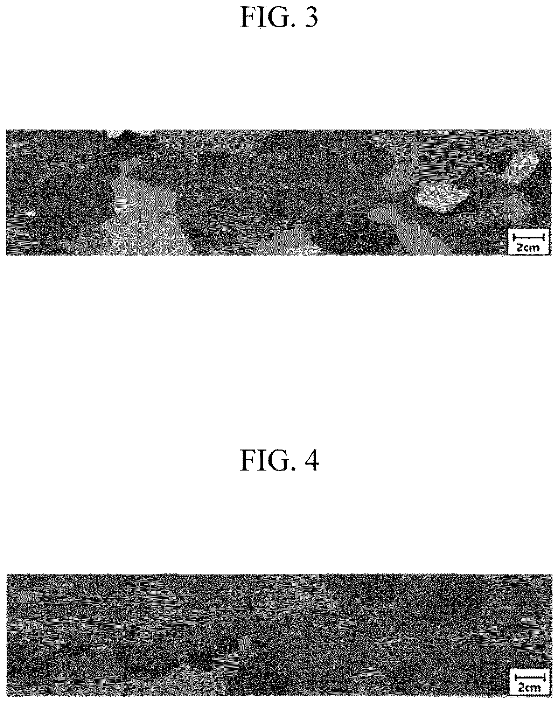

As illustrated in FIGS. 3 and 4, it can be confirmed that secondary recrystallization completely occurs in Inventive Material 7 and Comparative Material 31. In particular, in the case of Inventive Material 7, it can be confirmed that secondary recrystallization occurs perfectly even if hot-rolled sheet annealing is omitted.

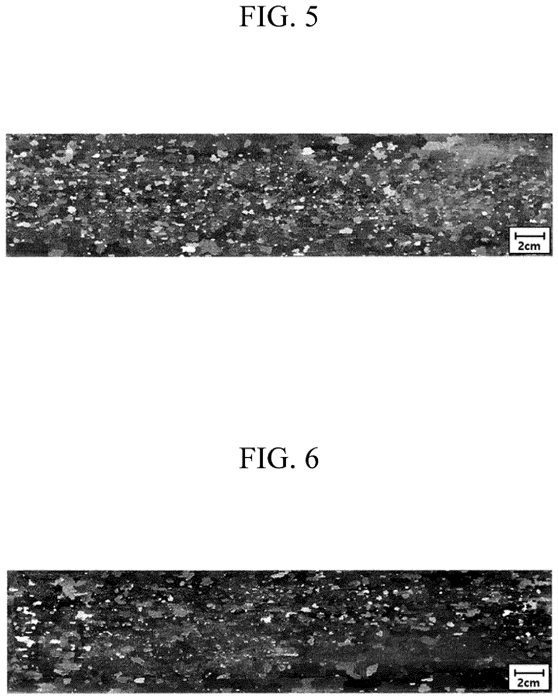

On the other hand, as illustrated in FIGS. 5 and 6, it can be seen that secondary recrystallization does not occur completely in Comparative Material 21 and Comparative Material 22, where the alloy components are not appropriately controlled or the coiling temperature is low. That is, it can be confirmed that a large number of crystal grains having a diameter of 1 mm or less exist.

The present invention is not limited to the implementation examples/embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-mentioned implementation examples/embodiments are exemplary in all aspects but are not limited thereto.

**Claims**

1.    A grain oriented electrical steel sheet, comprising:

by wt%, 2.0 to 4.0% of Si, 0.04 to 0.2% of Mn, 0.010% or less of N (excluding 0%), 0.005% or less of C (excluding 0%), 0.03 to 0.08% of Sn and 0.01 to 0.2% of Cr, the balance of Fe and inevitable impurities, and inclusions comprising at least one from among AlN, (Al,Si)N, (Al,Si,Mn)N, MnS, CuS, and $Al_2O_3$, wherein an average diameter of the inclusions is 0.5 to 6.0 $\mu$m, and 40 to 130/mm$^2$ inclusions having a diameter of 6.0 $\mu$m or less from among the inclusions are included.

2.    The grain oriented electrical steel sheet of claim 1, wherein:
an area fraction of crystal grains with a crystal grain diameter of 1 mm or less is 10% or less.

3.    The grain oriented electrical steel sheet of claim 1, further comprising:
Al: 0.005 to 0.030 wt%.

4.    The grain oriented electrical steel sheet of claim 1, further comprising:
S: 0.010 wt% or less.

5.    The grain oriented electrical steel sheet of claim 1, further comprising:
P: 0.0005 to 0.045 wt%.

6.    The grain oriented electrical steel sheet of claim 1, further comprising:
Sb: 0.1 wt% or less.

7.    The grain oriented electrical steel sheet of claim 1, further comprising:
at least one of Co: 0.1 wt% or less, Ni: 0.1 wt% or less, and Mo: 0.1 wt% or less.

8.    A manufacturing method of a grain oriented electrical steel sheet, comprising:

manufacturing a hot-rolled steel sheet by hot-rolling a slab containing, by wt%, Si: 2.0 to 4.0%, Mn: 0.04 to 0.2%, N: 0.010% or less (excluding 0%), C: 0.001 to 0.04%, Sn: 0.03 to 0.08% and Cr: 0.01 to 0.2 %, the balance of Fe and inevitable impurities and satisfying Expression 1 below;
coiling the hot-rolled steel sheet;
manufacturing a cold-rolled steel sheet by cooling the coiled hot-rolled steel sheet as it is and cold-rolling the coiled hot-rolled steel sheet;
performing primary recrystallization annealing on the cold-rolled steel sheet; and
performing secondary recrystallization annealing on the cold-rolled steel sheet that has been primary recrystallization annealed,
wherein, in the coiling, a coiling temperature is 700 to 850°C, and the Expression 2 below is satisfied.

[Expression 1]

$$0.038 \times [Si] - 0.069 - [N] \leq [C] \leq 0.038 \times [Si] - 0.069 + [N]$$

(In Expression 1, [Si], [N] and [C] denote contents (wt%) of Si, N and C in the slab, respectively.)

[Expression 2]

$$90 \leq (0.038 \times [Si] + [N] + [C]) \times [CT] \leq 130$$

(In Expression 2, [Si], [N] and [C] denote the contents (wt%) of Si, N and C in the slab, respectively, and [CT] denotes the coiling temperature (°C).)

9. The manufacturing method of claim 8, further comprising:
heating the slab to 1300°C or lower before the manufacturing of the hot-rolled steel sheet.

10. The manufacturing method of claim 8, wherein:
there is no heat treatment for applying heat from an outside of the steel sheet after the coiling and before the manufacturing of the cold-rolled steel sheet.

11. The manufacturing method of claim 8, wherein:
the manufacturing of the cold-rolled steel sheet includes cold-rolling the hot-rolled steel sheet once.

12. The manufacturing method of claim 8, wherein:

the performing of the primary recrystallization annealing includes a decarburizing and nitriding,
after the decarburizing, the nitriding is performed,
after the nitriding, the decarburizing is performed, or
the decarburizing and the nitriding are performed simultaneously.

13. The manufacturing method of claim 8, further comprising:
after the performing of the primary recrystallization annealing, applying an annealing separator.

14. The manufacturing method of claim 8, wherein:
in the performing of the secondary recrystallization annealing, secondary recrystallization is completed at a temperature of 900 to 1210°C.

FIG. 1

FIG. 2

FIG. 3

FIG. 4

FIG. 5

FIG. 6

## INTERNATIONAL SEARCH REPORT

| International application No. |
|---|
| **PCT/KR2021/019330** |

| A. | CLASSIFICATION OF SUBJECT MATTER |
|---|---|

**C22C 38/00**(2006.01)i; **C22C 38/02**(2006.01)i; **C22C 38/04**(2006.01)i; **C22C 38/60**(2006.01)i; **C21D 8/12**(2006.01)i; **H01F 1/147**(2006.01)i

According to International Patent Classification (IPC) or to both national classification and IPC

| B. | FIELDS SEARCHED |
|---|---|

Minimum documentation searched (classification system followed by classification symbols)

C22C 38/00(2006.01); B21B 3/02(2006.01); C21D 8/12(2006.01); C21D 9/46(2006.01); C22C 33/04(2006.01); C22C 38/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향성(oriented), 전기강판(electrical steel sheet), 실리콘(Si), 망간(Mn), 주석(Sn), 크롬(Cr), 권취(coiling)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2003-193142 A (JFE STEEL CORP.) 09 July 2003 (2003-07-09)<br>See paragraphs [0029] and [0045] and claims 1 and 3-4. | 1-14 |
| A | KR 10-2020-0066062 A (POSCO) 09 June 2020 (2020-06-09)<br>See paragraph [0105] and claims 1-4. | 1-14 |
| A | JP 04-297525 A (NIPPON STEEL CORP.) 21 October 1992 (1992-10-21)<br>See paragraph [0036] and claim 1. | 1-14 |
| A | JP 2017-133080 A (JFE STEEL CORP.) 03 August 2017 (2017-08-03)<br>See claims 2 and 6. | 1-14 |
| A | CN 109112283 A (WUHAN IRON AND STEEL COMPANY LIMITED) 01 January 2019 (2019-01-01)<br>See claims 1 and 5. | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 April 2022** | **20 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/019330**

| Patent document cited in search report | | | Publication date (day/month/year) | Patent family member(s) | | | Publication date (day/month/year) |
|---|---|---|---|---|---|---|---|
| JP | 2003-193142 | A | 09 July 2003 | JP | 4239458 | B2 | 18 March 2009 |
| KR | 10-2020-0066062 | A | 09 June 2020 | CN | 113166892 | A | 23 July 2021 |
| | | | | EP | 3889297 | A1 | 06 October 2021 |
| | | | | KR | 10-2142511 | B1 | 07 August 2020 |
| | | | | WO | 2020-111741 | A1 | 04 June 2020 |
| JP | 04-297525 | A | 21 October 1992 | JP | 2521586 | B2 | 07 August 1996 |
| JP | 2017-133080 | A | 03 August 2017 | JP | 6512412 | B2 | 15 May 2019 |
| CN | 109112283 | A | 01 January 2019 | | None | | |

Form PCT/ISA/210 (patent family annex) (July 2019)